# EUROPÄISCHE PATENTSCHRIFT

(11) **EP 0 713 757 B1**
(45) Veröffentlichungstag und Bekanntmachung des Hinweises auf die Patenterteilung: **28.03.2001**
(21) Anmeldenummer: 95250261.5
(22) Anmeldetag: 27.10.1995
(51) Int. Cl.: B29C 45/17

(54) **Vorrichtung zum Entsorgen von Abgüssen von Kunststoffspritzgiessmaschinen**
Apparatus for disposing purged resins from plastic injection moulding machines
Dispositif pour éliminer les matières purgées de machines à mouler par injection

(30) Priorität: 25.11.1994 DE 4443285
(43) Veröffentlichungstag der Anmeldung: 29.05.1996
(73) Patentinhaber: Atecs Mannesmann AG, 40213 Düsseldorf (DE)
(72) Erfinder: Bertleff, Wolfgang, Dipl.-Ing., D-91058 Erlangen (DE)
(74) Vertreter: Meissner, Peter E., Dipl.-Ing.

(56) Entgegenhaltungen:
- GB-A- 600 685
- US-A- 2 345 013
- PATENT ABSTRACTS OF JAPAN vol. 9 no. 107 (M-378) ,11.Mai 1985 & JP-A-59 229326 (YAZAKI KAKOU KK) 22.Dezember 1984,
- PATENT ABSTRACTS OF JAPAN vol. 95 no. 3,28.April 1995 & JP-A-06 344382 (JAPAN STEEL WORKS LTD) 20.Dezember 1994,
- DATABASE WPI Section Ch, Week 9248 Derwent Publications Ltd., London, GB; Class A11, AN 92-393176 [48] & JP-A-04 290 713 (JAPAN STEEL WORKS LTD)

## Beschreibung

Die Erfindung betrifft eine Vorrichtung zum Entsorgen von Abgüssen von Kunststoffspritzgießmaschinen gemäß dem Oberbegriff des Anspruchs 1.

Eine derartige Vorrichtung ist aus der JP59229326 bekannt.

Die Abkühlung von Teer oder Stoffen, die im warmen Zustand weich und im kalten Zustand fest sind, auf einem Transportband ist aus der GB 600685 allgemein bekannt.

Bei Kunststoffspritzgießmaschinen sind außerhalb der Produktion von Formteilen Kunststoffschmelzen oder Spülmaterialien, insbesondere bei Material- oder Farbwechseln des Kunststoffmaterials, abzuspritzen und von der Spritzeinheit wegzutransportieren. Üblicherweise wird während der Zugabe von Spülmitteln oder im Fall von neuem Ausgangsmaterial im Einzugsbereich der Spitzzylinder der Kunststoffspritzgießmaschine durch weiteres Aufdosieren und Abspritzen gereinigt und mit neuem homogenen Ausgangsmaterial gefüllt. Für den Abspritzvorgang bei einem Farb- oder Materialwechsel zwischen zwei Produktionsphasen wird die Einspritzeinheit von der Formöffnung hierzu abgehoben und zurückgefahren. Beim Abspritzen fällt dabei das abgespritze Altmaterial oder das Materialgemisch in den Bereich unterhalb der Einspritzeinheit und wird dort üblicherweise von Hand entfernt und mit einem Schieber wegtransportiert.

Beim diskontinuierlichen Abtransport entstehen relativ große, sperrige Massenanhäufungen, die Schwierigkeiten beim Wegtransport hervorrufen. Verstärkt wird dieses Problem noch durch nachtropfende Schmelze.
Im heißen Zustand sind die Schmelzen, insbesondere bei Polypropylen, sehr klebrig und lösen sich nur schwer vom Untergrund.

Die Erfindung hat sich das Ziel gesetzt, eine Vorrichtung zum Entsorgen von Abgüssen von Kunststoffspritzgießmaschinen zu schaffen, die in einfacher Bauweise ein wartungsarmes und störungsfreies Entsorgen ermöglicht.

Die Erfindung löst dieses Problem durch die Merkmale des Anspruchs 1. In den Unteransprüchen sind vorteilhafte Weiterbildungen aufgeführt.
Erfindungsgemäß wird ein Endlostransportband eingesetzt, bei dem mindestens der Obergurt gekühlt ist.

Beim Auftreffen der Kunststoffschmelze auf das Entsorgungsband wird dieser relativ schnell eine große Wärmemenge entzogen. Durch das Erkalten und das Erstarren des Kunststoffes an der Grenzschicht zwischen der Schmelze und dem Obergurt wird die Haftung am Endlosband stark gemindert, so daß sich die Kunststoffmasse an der vorderen Umlenkrolle des Entsorgungsbandes schon nach kurzer Förderzeit und Förderstrecke vom Obergurt löst.
Zur vollständigen Reinigung des Bandes wird vorgeschlagen, zusätzlich einen beispielsweise keilförmigen Gurtabstreifer im Bereich der vorderen Antriebsrolle einzusetzen.
Durch Steuern der Bandlaufgeschwindigkeit oder durch gezieltes Takten des Förderbandes läßt sich die Anhäufung der Kunststoffschmelze auf dem Obergurt regulieren. Hierdurch sind weitere Möglichkeiten der Einflußnahme auf die Abkühlgeschwindigkeit und das Erstarren der Kunststoffschmelze auf den zum Abtransport benötigten Raum, hier im wesentlichen die Bandbreite, die Bandlänge und die maximale Förderguthöhe sowie auf Gestalt und Größe der erstarrten Schmelze im Hinblick auf die Leistungsfähigkeit des Abtransportes gegeben.
Die geförderte und erkaltete Kunststoffschmelze wird in einen Auffangbehälter transportiert. Von hieraus besteht die Möglichkeit, eine Zerkleinerungsmühle nachzuschalten. Die Leistungsfähigkeit einer solchen Zerkleinerungsmühle wird insbesondere durch die mittels des temperatur- und geschwindigkeitsgeregelten Endlosbandes in ihrer Gestalt und Größe einstellbaren Schmelze beeinflußt. Als Kühlmedium kommen Luft oder Wasser zum Einsatz.
Die Luft wird vorzugsweise über Düsen gegen die Innenseite des Untergurtes gepreßt. Bei der Verwendung von Wasser kommt ein geschlossener Kühlkreislauf zum Einsatz, wobei die Kühlelemente sich jeweils gegen die Unterseite des Obergurtes lehnen. Bei der Verwendung eines Kühlkastens gleitet der Obergurt des Förderbandes in nahezu kompletter Breite und Länge über den Kasten.
Bei dem Einsatz einer Rohrschlange wird der Obergurt in seiner Breite jeweils linienförmig gekühlt. Durch die Abstände zwischen den einzelnen Rohrkuppen tritt eine gewisse Dämpfung des Aufpralls der Kunststoffmasse durch das Transportband auf. In einer vorteilhaften Weiterbildung werden gekühlte Walzen vorgeschlagen, durch die ein verschleißarmes Abrollen des Obergurtes möglich ist.

Als Fördergurt kommt ein Material zum Einsatz, das ausreichend hitzebeständig ist und eine Wandstärke aufweist, die eine hinreichende Wärmemenge durchläßt.

Die Fördergeschwindigkeit des Endlosbandes 21 kann insbesondere auf der Basis der Bandtemperatur geregelt werden. Das Endlosband 21 kann leicht geneigt angeordnet werden, um den Abtransport des Kunststoffmaterials zu erleichtern. Es ist aber auch eine horizontale Anordnung vorgesehen bei gleichzeitiger Reversiermöglichkeit des Endlosbandes 21 und ggf. zwei Ablagerstellen in Form von Auffangbehältern 51 für verschiedene Materialien.

Ein Beispiel der Erfindung ist in der beiliegenden Zeichnung dargelegt.
Dabei zeigen die
- Figur 1: das Schema der Abgußentsorgungsvorrichtung
- Figur 2: verschiedene Kühleinrichtungen.

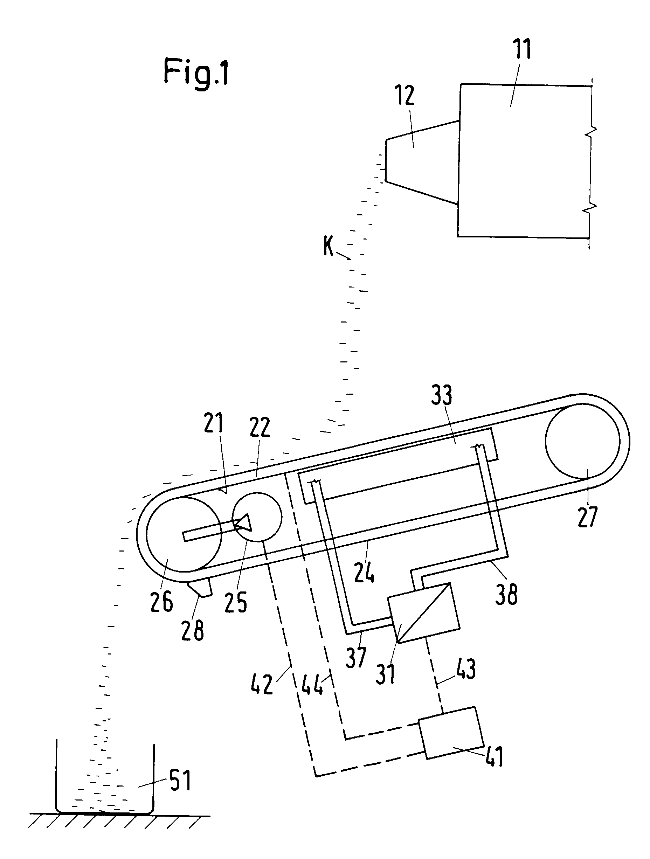

Die Figur 1 zeigt eine Kunststoffspritzgießmaschine 11 mit einer Spritzeinheit 12, aus der Kunststoffmasse K entsorgt wird.
Die Kunststoffmasse K fällt dabei auf den Obergurt 22 eines Endlostransportbandes 21. Das Endlostransportband 21 wird von einer Rolle 27 umgelenkt und einer Rolle 26, die mit einem Antrieb 25 in Verbindung steht, angetrieben.
Im Zwischenraum zwischen dem Obergurt 22 und dem Untergurt 24 sind Kühlelemente 33 vorgesehen, die über einen Zufluß 37 und einen Abfluß 38 mit einer Kühlmittelversorgungsstation 31 verbunden sind.
Die Kühlmittelversorgungsstation 31 und der Antrieb 25 sind über Meß- und Steuerleitungen 42, 43 mit einer Regelvorrichtung 41 verbunden.
Der Kunststoff K fällt nach Verlassen des Endlostransportbandes 21 in einen Auffangbehälter 51. Im Bereich der Umlenkrolle 27 ist ein Abstreifer 28 vorgesehen, der sich gegen den Untergurt 24 abstützt.

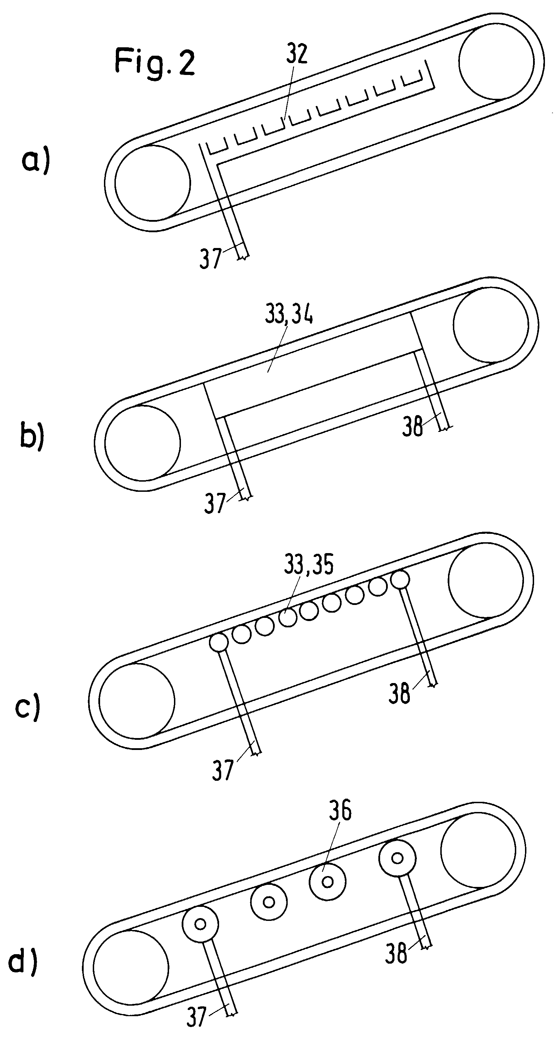

Die Figur 2 zeigt die verschiedenen Ausgestaltungen der Kühleinrichtung. In Position a sind Düsen 32 dargestellt, die Kühlluft gegen den Untergurt führen.
In Position b ist ein Kühlkasten 34 dargestellt, über dessen Oberseite der Obergurt gleitend geführt wird.
In c sind meanderförmig geführte Kühlrohre 35 dargestellt. Die einzelnen Rohre können voneinander distanziert angeordnet sein, um eine ausreichende Dämpfungswirkung des auf das Endlosband herabfallenden Materials K zu erreichen. Position d zeigt wassergekühlte Walzen 36, über die der Obergurt 22 geführt wird.

### Positionsliste

### Spritzeinrichtung

- 11: Kunststoffspritzgießmaschine
- 12: Spritzeinheit

### Transporteinrichtung

- 21: Endlostransportband
- 22: Obergurt
- 23: Unterseite Obergurt
- 24: Untergurt
- 25: Antrieb
- 26: Antriebsrolle
- 27: Umlenkrolle
- 28: Abstreifer

### Kühleinrichtung

- 31: Kühlmittelversorgung
- 32: Düse
- 33: Kühlelement
- 34: Kühlkasten
- 35: Rohre
- 36: Walzen
- 37: Zufluß
- 38: Abfluß

### Regeleinrichtung

- 41: Regelvorrichtung
- 42, 43: Steuerleitungen
- 44: Meßleitungen

### Auffangeinrichtung

- 51: Auffangbehälter

## Patentansprüche

1. Vorrichtung zum Entsorgen von Abgüssen von Kunststoffspritzgießmaschinen mit einer Entsorgungsvorrichtung, die als Endlostransportband (21) ausgebildet ist, das unterhalb der Spritzgießeinheit (12) der Kunststoffspritzgießmaschine (11) angeordnet ist,
dadurch gekennzeichnet,
daß mindestens die Innenseite (23) des Obergurtes (22) des Endlostransportbandes (21) mit einem Kühlmittel in Verbindung steht und daß Kühlelemente (33) vorgesehen sind, die die Innenseite (23) des Obergurtes (22) kontaktieren.

2. Vorrichtung nach Anspruch 1,
dadurch gekennzeichnet,
daß im Bereich des Endlostransportbandes (21) zwischen dem Obergurt (22) und dem Untergurt (24) Düsen (32) vorgesehen sind, durch die ein Kühlmedium gegen die Innenseite (23) des Obergurtes (22) geführt wird.

3. Vorrichtung nach Anspruch 2
dadurch gekennzeichnet,
daß das Kühlmedium Luft ist.

4. Vorrichtung nach Anspruch 1,
dadurch gekennzeichnet,
daß das Kühlelement (33) ein Kühlkasten (34) ist, auf dessen Oberseite der Obergurt (22) gleitend geführt wird.

5. Vorrichtung nach Anspruch 1
dadurch gekennzeichnet,
daß das Kühlelement (33) eine meanderförmig im rechten Winkel zur Förderrichtung des Endlostransportbandes (21) geführte Rohrschlange (35) ist.

6. Vorrichtung nach Anspruch 1,
dadurch gekennzeichnet,
daß das Kühlelement (33) aus Walzen (36) gebildet ist.

7. Vorrichtung nach den Ansprüchen 1 - 6
dadurch gekennzeichnet
daß das Kühlelement (33) über einen Zufluß (37) und einen Abfluß (38) mit einer Kühlmedienversorgungsstation (31) zur Förderung von Wasser verbunden ist.

8. Vorrichtung nach Anspruch 1
dadurch gekennzeichnet,
daß am Untergurt (24) im Bereich nach der Antriebsrolle (26) ein Gurtabstreifer (28) vorgesehen ist.

9. Vorrichtung nach Anspruch 1,
dadurch gekennzeichnet,
daß das Endlostransportband (21) eine zur hohen Wärmeabfuhr geeignete geringe Wanddicke besitzt.

10. Vorrichtung nach Anspruch 9,
dadurch gekennzeichnet,
daß das Endlostransportband (21) aus wärmebeständigem Material aufgebaut ist und für die Förderung von Kunststoffmaterial mit Temperaturen von über 200°C geeignet ist.

11. Vorrichtung nach Anspruch 1 und 7,
dadurch gekennzeichnet,
daß das Endlostransportband (21) mit einem Antrieb (25) in Verbindung steht, daß der Antrieb (25) und die Kühlmittelversorgungsstation (31) über Meß- und Steuerleitungen (42, 43) mit einer Regelvorrichtung (41) verbunden ist.

12. Vorrichtung nach Anspruch 11,
dadurch gekennzeichnet,
daß der Antrieb (25) des Endlostransportbandes (21) den Gurt (22, 24) vor- und rückwärts antreibt.

## Claims

1. Apparatus for disposing of purged resins from plastics injection moulding machines, having a disposal device, which is formed as an endless conveyor belt (21) and is disposed under the injection moulding unit (12) of the plastics injection moulding machine (11), characterised in that at least the inner face (23) of the upper belt (22) of the endless conveyor belt (21) is in contact with a coolant and in that cooling elements (33) are provided, which contact the inner face (23) of the upper belt (22).

2. Apparatus according to claim 1, characterised in that in the region of the endless conveyor belt (21), between the upper belt (22) and the lower belt (24) nozzles (32) are provided, through which a coolant is guided against the inner face (23) of the upper belt (22).

3. Apparatus according to claim 2, characterised in that the coolant is air.

4. Apparatus according to claim 1, characterised in that the cooling element (33) is a cooling box (34), on whose upper face the upper belt (22) is slidingly guided.

5. Apparatus according to claim 1, characterised in that the cooling element (33) is a coiled pipe (35) guided in a meandering manner at right angles to the conveying direction of the endless conveyor belt (21).

6. Apparatus according to claim 1, characterised in that the cooling element (33) consists of rollers (36).

7. Apparatus according to claims 1-6, characterised in that the cooling element (33) is connected to a coolant supply station (31) for conveying water via a supply line (37) and a discharge line (38).

8. Apparatus according to claim 1, characterised in that on the lower belt (24) in the region after the drive pulley (26) a belt scraper (28) is provided.

9. Apparatus according to claim 1, characterised in that the endless conveyor belt (21) has a small wall thickness for high heat dissipation.

10. Apparatus according to claim 9, characterised in that the endless conveyor belt (21) is constructed from heat-resistant material and is suitable for conveying plastics material at temperatures of over 200°C.

11. Apparatus according to claim 1 and 7, characterised in that the endless conveyor belt (21) communicates with a drive (25), and in that the drive (25) and the coolant supply station (31) are connected to a control (41) via measuring and control lines (42, 43).

12. Apparatus according to claim 11, characterised in that the drive (25) of the endless conveyor belt (21) drives the belt (22, 24) forwards and backwards.

## Revendications

1. Dispositif pour évacuer des produits coulés de machines de coulée par injection de matière synthétique, comportant un dispositif d'évacuation, qui est réalisé comme bande de transport sans fin (21), qui est agencée au-dessous de l'unité de coulée par injection (12) de la machine (11) de coulée par injection de matière synthétique,
caractérisé en ce qu'au moins la face interne (23) du brin supérieur (22) de la bande de transport sans fin (21) est reliée à un moyen de refroidissement, et en ce que des éléments de refroidissement (33) sont prévus, lesquels sont en contact avec la face interne (23) du brin supérieur (22).

2. Dispositif selon la revendication 1,
caractérisé en ce que, dans la zone de la bande de transport sans fin (21) entre le brin supérieur (22) et le brin inférieur (24), sont prévues des buses (32) à travers lesquelles un agent de refroidissement est guidé contre la face interne (23) du brin supérieur (22).

3. Dispositif selon la revendication 2,
caractérisé en ce que l'agent de refroidissement est de l'air.

4. Dispositif selon la revendication 1,
caractérisé en ce que l'élément de refroidissement (33) est un caisson de refroidissement (34), sur la face supérieure duquel le brin supérieur (22) est guidé en glissant.

5. Dispositif selon la revendication 1,
caractérisé en ce que l'élément de refroidissement (33) est un serpentin (35) guidé sous forme de méandre à angle droit par rapport à la direction de transport de la bande de transport sans fin (21).

6. Dispositif selon la revendication 1,
caractérisé en ce que l'élément de refroidissement (33) est formé de rouleaux (36).

7. Dispositif selon les revendications 1 - 6,
caractérisé en ce que l'élément de refroidissement (33) est relié, par l'intermédiaire d'une alimentation (37) et d'une évacuation (38), à un poste d'alimentation en agent de refroidissement (31) pour fournir de l'eau.

8. Dispositif selon la revendication 1,
caractérisé en ce qu'un racleur (28) est prévu sur le brin inférieur (24) dans la zone après le rouleau d'entraînement (26).

9. Dispositif selon la revendication 1,
caractérisé en ce que la bande de transport sans fin (21) possède une faible épaisseur de paroi, appropriée pour une forte dissipation thermique.

10. Dispositif selon la revendication 9,
caractérisé en ce que la bande de transport sans fin (21) est réalisée en une matière résistant à la chaleur et est appropriée pour transporter de la matière synthétique à des températures supérieures à 200°C.

11. Dispositif selon les revendications 1 et 7,
caractérisé en ce que la bande de transport sans fin (21) est reliée à un entraînement (25), en ce que l'entraînement (25) et le poste d'alimentation en agent de refroidissement (31) sont reliés, par l'intermédiaire de liaisons de mesure et de commande (42, 43), à un dispositif de réglage (41).

12. Dispositif selon la revendication 11,
caractérisé en ce que l'entraînement (25) de la bande de transport sans fin (21) entraîne, en avant et en arrière, le brin (22, 24).
